Europäisches Patentamt

European Patent Office

Office européen des brevets

(19)

(11) Veröffentlichungsnummer: **0 001 581**
**B1**

(12) **EUROPÄISCHE PATENTSCHRIFT**

(45) Veröffentlichungstag der Patentschrift:
06.01.82

(21) Anmeldenummer: **78101042.6**

(22) Anmeldetag: **30.09.78**

(51) Int. Cl.³: **B 01 F 3/00**, B 29 B 1/04,
C 08 G 18/10 // D06N3/14

(54) Verfahren und Vorrichtung zum Mischen und Auftragen reaktionsfähiger Stoffe.

(30) Priorität: **14.10.77 DE 2746188**

(43) Veröffentlichungstag der Anmeldung:
**02.05.79 Patentblatt 79/9**

(45) Bekanntmachung des Hinweises auf die Patenterteilung:
**06.01.82 Patentblatt 82/1**

(84) Benannte Vertragsstaaten:
**DE FR GB**

(56) Entgegenhaltungen:
**DE-A-1 778 060**
**DE-A-2 211 055**
**DE-A-2 226 043**
**DE-A-2 245 082**
**DE-A-2 252 201**
**DE-A-2 252 872**
**DE-A-2 344 272**
**DE-A-2 349 433**
**DE-A-2 447 369**
**DE-A-2 538 437**
**DE-A-2 543 302**
**DE-B-1 059 655**
**GB-A-1 313 182**

(73) Patentinhaber: **BAYER AG, Zentralbereich Patente, Marken und Lizenzen, D-5090 Leverkusen 1, Bayerwerk (DE)**

(72) Erfinder: **Pisaric, Karl Heinz, Marderweg 86, D-5024 Pulheim (DE)**
Erfinder: **Weber, Karl-Arnold, Dr., Saarstrasse 59, D-5090 Leverkusen (DE)**
Erfinder: **Träubel, Harro, Dr., Dresdener Strasse 14, D-5090 Leverkusen (DE)**
Erfinder: **Brauner, Dieter, Weyerstrasse 276, D-5650 Solingen 19 (DE)**
Erfinder: **Pahl, Manfred, Dr., Goethestrasse 57d, D-4047 Dormagen (DE)**

## Verfahren und Vorrichtung zum Mischen und Auftragen reaktionsfähiger Stoffe

Die Erfindung betrifft ein Verfahren zum Mischen mehrerer viskoser, schnell reagierender fluider Stoffe in zwei Stufen und eine Vorrichtung zur Durchführung des Verfahrens.

Vorrichtungen zum Mischen und Auftragen reaktiver fließfähiger Stoffe, beispielsweise Polyurethan-Ausgangsverbindungen bei der Umkehrbeschichtung, sind bekannt. Bei einer Ausführungsform ist ein hochtouriger Stachelrührer in die Mischkammer eingebaut. Die Störanfälligkeit dieser Vorrichtung ist hoch; meist wird schon nach 1 bis 3 Stunden die Stoffbuchsendichtung undicht, Produkt tritt aus und das Mischungsverhältnis ändert sich, wodurch die Produktqualität verschlechtert wird.

Bei den meisten bekannten Mischvorrichtungen ohne bewegte Teile wie Außenmischdüse, Wirbelkammer, Gegenstrominjektor reicht die Mischgüte nicht aus. Das gilt auch für die in der deutschen Offenlegungsschrift 22 45 081 beschriebenen Vorrichtung, wo Luft über eine Zerstäuberdüse in die Vorlaufleitungen oder — falls vorgesehen — in die Rücklaufleitungen eingegeben wird.

Bei einem statischen Mischen nach der deutschen Offenlegungsschrift 25 22 106 ist bei hinreichenden Längen eine ausreichende Mischgüte erzielbar, jedoch wird die Verweilzeit für schnell reagierende Komponenten zu groß. Ausgehend von den strömungsärmeren Gebieten setzt sich der Mischer schnell zu.

Der Erfindung liegt die Aufgabe zugrunde, ein Verfahren und eine Vorrichtung zum Mischen und Auftragen schnell reagierender Stoffe mit großen Viskositätsunterschieden und gegebenenfalls Temperaturunterschieden zu entwickeln, die sich durch eine große Betriebssicherheit auszeichnet.

Diese Aufgabe wird verfahrensgemäß dadurch gelöst, daß man die Stoffe und ein Gas in eine Mischkammer einspeist, ihnen einen Drall aufprägt und sie vorvermischt und dieses Gas-Flüssigkeitsgemisch unmittelbar nach dessen Bildung einer druckverlustarmen statischen Mischvorrichtung mit sich kreuzenden Leitflächen zuführt. Weitere vorteilhafte Verfahrensweisen sind in den Unteransprüchen dargestellt. Die Vorrichtung zur Durchführung des Verfahrens besteht aus einer zylindrischen Mischkammer mit Einspeisestellen für viskose, schnell reagierende, fluide Stoffe und für Gas und einer Austrittsöffnung an der Stirnseite der Mischkammer und ist dadurch gekennzeichnet, daß die Einspeisestellen für mindestens einen Stoff und für das Gas so in der Mischkammer eingebaut sind, daß Stoff(e) und Gas näherungsweise tangential in die Mischkammer von der Mantelfläche her einströmen, daß die Einspeisestelle(n) für die weiteren Stoffe stromabwärts hin versetzt sind und daß zwischen Einspeisestelle(n) und Austrittsöffnung eine statische Mischvorrichtung vorhanden ist.

Mit dem erfindungsgemäßen Verfahren wird neben einer sehr guten Vermischung der Reaktionskomponenten ein enges Verweilzeitspektrum in der Mischkammer erreicht. Durch den Drall wird das Absetzen des Gemisches behindert. Der Drall wird in erster Linie durch den tangentialen Eintrag des Gases erzielt. Zur Unterstützung des Dralls wird auch vorzugsweise die erste Komponente des Reaktionsgemisches tangential eingeleitet. Die Gasmenge kann soweit gesteigert werden, daß intensive Turbulenz auftritt. Die Zugabe der reagierenden anderen Komponente(n) erfolgt durch weiter stromabwärts angebrachte Einspeisestellen. Auf diese Weise wird ausgeschlossen, daß infolge einer Reaktion der weiteren Komponente(n) mit der ersten Komponente der Eintritt der ersten Komponente in die Mischkammer gestört oder verhindert wird. Vorzugsweise werden die weitere(n) Komponente(n) so zugeführt, daß der Drall verstärkt wird. Es hat sich jedoch gezeigt, daß auch eine radiale Zuführung der weiteren Komponente(n) zu einer befriedigenden Vorvermischung führt. Bevorzugt wird als erste Komponente der Stoff in der Nähe der Gaszuführungen eingespeist, der am meisten zum Massenstrom beiträgt. Beispielsweise würde man bei einer Beschichtung mit Polyurethanausgangsstoffen das NCO-Prepolymer als erstes einspeisen und die Vernetzungskomponente, z. B. Polyamine, stromabwärts zudosieren.

Wenn das zugeführte Gas nur die Aufgabe hat, die Durchflußgeschwindigkeit zu erhöhen und das Gemisch in Turbulenz zu versetzen, nimmt man ein Inertgas, vorzugsweise Luft. Neben dieser Funktion kann es aber auch zusätzlich an der Reaktion teilnehmen, d. h. Bestandteile enthalten, die Bestandteile der Rezeptur, z. B. Treibgas, sind oder chemisch in die Reaktion eingreifen.

Mit dem erfindungsgemäßen Verfahren hat man die Möglichkeit, beim Anfahren durch Ventilstellung die Zuführung des Vernetzers zeitlich zu verzögern und beim Abschalten die Zudosierung des Vernetzers zeitlich vor das Abschalten des Prepolymers zu legen. Dadurch lassen sich störende Produktablagerungen im Spritzkopf weitgehend vermeiden, und es ist ein störungsfreier Langzeitbetrieb gewährleistet.

Die Gaseintrittsöffnungen lassen sich auch dazu benutzen, nach Beendigung des Spritzvorganges ein Lösungsmittel/Gas-Gemisch in die Mischkammer einzuleiten; aufgrund der Turbulenz wird die Mischkammer intensiv gereinigt. Nach dem erfindungsgemäßen Verfahren sind Systeme verarbeitbar, die in sehr kurzen Zeiten (innerhalb weniger Sekunden) reagieren. Das enge Verweilzeitspektrum verhindert ein Zuwachsen des Mischers. Als besonderer Vorteil ist zu erwähnen, daß Stoffe unterschiedlicher Viskosität sehr gut und schnell vermischt werden können. Die hochviskosen Stoffe können eine Viskosität über 1000 mPa s, vorzugsweise 2000 bis 10 000 mPa s bei 20°C, haben. Daher können die für hochwertige Beschichtungen besonders geeigneten Polyester statt der Polyether gleichen Molekulargewichts als Polyurethanausgangsmaterialien verwendet werden. Die Viskosität der Kettenverlängerungsmittel ist erheblich kleiner, vorzugsweise unter 50 mPa s. Bei dem erfindungsgemäßen Verfahren ist es unerheblich, ob die Mengen der miteinander zu vermischenden Stoffe näherungsweise gleich sind oder erheblich voneinander abweichen. Die Mischgüte ist in beiden Fällen sehr hoch.

Gelegentlich wird ein Stoff erwärmt, um die Viskosität herabzusetzen. Dadurch erhöht sich natürlich die Reaktionsgeschwindigkeit. Nach dem erfindungsgemäßen Verfahren können problemlos auch Stoffe gemischt werden, die unterschiedliche Temperatur haben, Dichtungsprobleme können nicht auftreten, und wegen der kurzen Verweilzeit und des engen Verweilzeitspektrums stört auch die Zunahme der Reaktionsgeschwindigkeit nicht.

Es ist überraschend, daß zwar mit einer einzigen Mischvorrichtung alleine nicht gearbeitet werden kann — entweder reicht die Mischgüte nicht aus oder die Verweilzeit ist zu groß und der Mischer wächst zu —, daß aber durch ein zweistufiges Vermischen, durch die Hintereinanderschaltung zweier Mischvorrichtungen, ein so guter Mischeffekt erzielbar ist, daß die statische Mischvorrichtung gegenüber dem üblichen Betriebsbereich (Länge größer/gleich 5mal Durchmesser) verkürzt werden kann und dadurch die Verweilzeit des Reaktionsgemisches im Mischer so herabgesetzt ist, daß ein Zuwachsen praktisch ausgeschlossen werden kann.

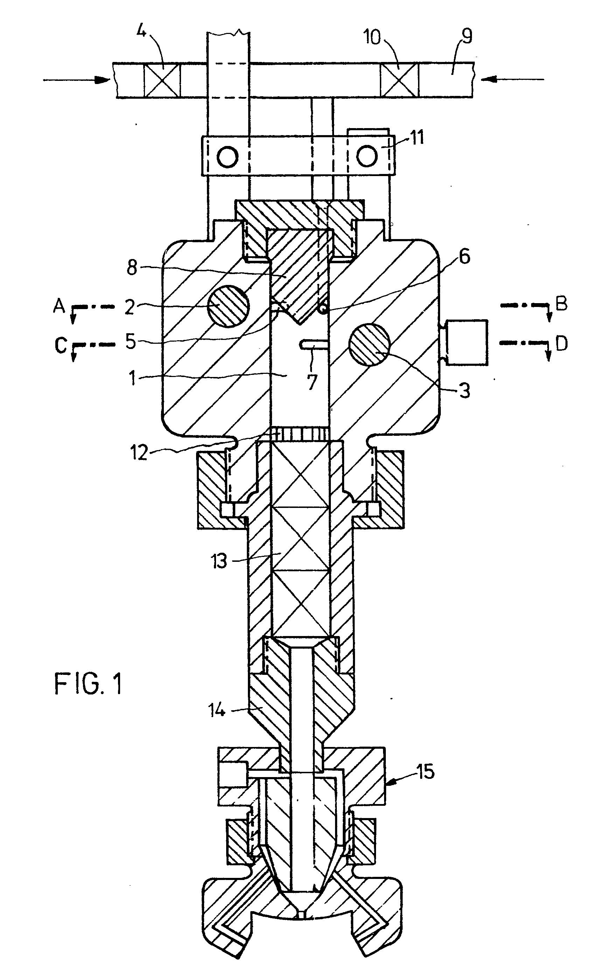

Die erfindungsgemäße Vorrichtung ist in den Figuren beispielhaft dargestellt und im folgenden näher beschrieben. Es zeigen die Figuren 1 bis 3 Schnitte durch die Mischvorrichtung.

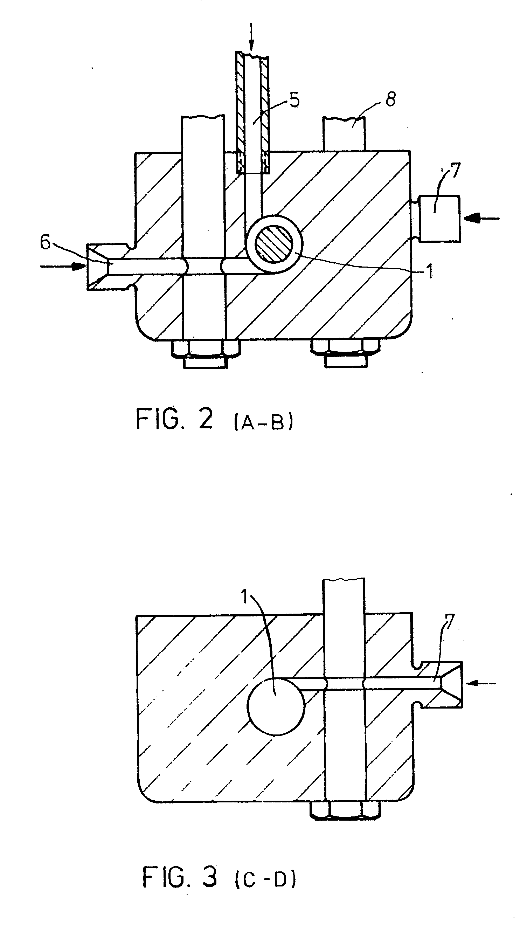

Die Mischkammer dient zur Verarbeitung schnell reagierender Gemische aus zwei Stoffen. In die Mischkammer 1 werden über die Ventile 2, 3, 4 die beiden Reaktionskomponenten und die Luft über die Eintrittsöffnungen 5, 6, 7 zugeführt. In den Figuren 2 und 3 ist zu erkennen, daß die Einlauföffnungen 6, 7 so angeordnet sind, daß sich in der Mischkammer 1 eine turbulente Drallströrung einstellt. Am oberen Teil der Mischkammer 1 ist ein kegelförmiger Verschlußbolzen 8 vorhanden, der die Drallströmung verstärkt. Bei der Reinigung kann er leicht entfernt werden. Durch eine weitere Zuführung 9, die über das Ventil 10 abgesperrt werden kann, kann Lösungsmittel mit und ohne Luft zu Reinigungszwecken zugegeben werden.

Über ein Gestänge 11 werden die Ventile 2, 3 gesteuert. In diesem Beispiel ist es so eingerichtet, daß das Ventil 2 vor 3 geöffnet und beim Abschalten als letzteres von beiden geschlossen wird. Der untere Teil der Mischkammer 1 wird von einem Scherelement 12 ausgefüllt, welches hier die Form eines Kreuzgitters aufweist. Der statische Mischer 13 mit mehreren sich kreuzenden Leitflächen ist geeignet, Produkte mit großem Viskositätsunterschied schnell bei geringem Druckabfall und engem Verweilzeitspektrum ausreichend zu vermischen. In dem Beispiel hat der statische Mischer 13 einen Durchmesser von 2 cm und eine Länge von 7 cm. Die Mischkammer 1 ist durch eine durchbohrte Verschlußschraube 14 begrenzt. Daran schließt sich die Zerstäubungsdüse 15 an.

Mit der in diesem Beispiel beschriebenen Vorrichtung lassen sich Leder oder andere Substrate in einem Direkt-Umkehrprozeß mit Polyurethanen lösungsmittelarm beschichten. Der visuelle Eindruck ist hervorragend. Die Mischvorrichtung arbeitet mehrere Tage störungsfrei.

Ein solches Beschichtungsverfahren kann beispielsweise folgendermaßen durchgeführt werden:

Ein Isocyanatprepolymer und ein gegebenenfalls in organischen Lösemitteln gelöster Vernetzer, z. B. ein Polyamin, werden über Dosierpumpen in einen Mischkopf gefördert und vermischt (vgl. H. Träubel, Leder [1974], 162/166; J. Coated Fabrics [1975], 10, 114/123). Die erhaltene, in Reaktion befindliche Mischung kann ausgetragen und durch Sprühen auf Substrate verteilt werden.

Als NCO-Prepolymere werden im weitesten Sinne isocyanatgruppenhaltige Verbindungen, wie Di- und Polyisocyanate in monomerer Form oder Urethan oder Harnstoffgruppen enthaltende, oligomere Verbindungen verstanden.

Vernetzer sind Verbindungen mit mindestens 2, mit Isocyanaten reagiblen Wasserstoffatomen, einschließlich Wasser, beispielsweise nieder- und höher- bzw. hochmolekulare Polyhydroxy- und Polyaminoverbindungen.

Als Substrate kommen Leder und Materialien aus natürlichen und/oder synthetischen Fasern wie Vliese, Gewebe, Gewirke, Papier in Frage.

Beispiel 1

In die erfindungsgemäße Vorrichtung wird zur Durchführung einer PUR-Reaktivbeschichtung durch die Öffnung 6 eine 80gew.-%ige Lösung des Polyesterprepolymers in Toluol mit endständigen NCO-Gruppen und einem NCO-Gehalt von 3,2 Gew.-% (bezogen auf die Lösung) mit einer Fördermenge von 500 g/min eingespeist, das auf eine Temperatur von 60°C erwärmt wurde und eine Viskosität von 600 mPa s aufweist. Durch die Öffnung 7 werden in die Mischkammer 134 g/min einer Härterlösung von Raumtemperatur der Zusammensetzung

    200 g Toluylendiamin
    800 g Methylethylketon
    200 g einer Rußanreibung zur Farbgebung
    50 g Siliconöl als Verlaufsmittel
    ————
    1250 g

zugespeist, die eine Viskosität von unter 50 mPa s aufweist.

Durch die Öffnung 5 wird Luft mit einem Druck von 3 bar eingeführt. Nachdem die Komponenten in die Vormischkammer, im Scherteil und den statischen Mischern vermischt wurden, wird das gebildete Gemisch beim Austritt aus der Vorrichtung unter Luftzerstäubung mit Druckluft von 3 bar verdüst und direkt auf eine Glasplatte aufgetragen. Der Auftrag erfolgt in der Weise, daß die Mischvorrichtung an einen Changierschlitten befestigt wird, dessen Bewegungsrichtung senkrecht zu einem darunter befindlichen Transportband verläuft, das gleichmäßig senkrecht zu der Changierbewegung der Vorrichtung fortbewegt wird. Diese Art Beschichtung von Substraten aller Art ist beispielsweise beschrieben in Leder (1974), 162/166.

Die Glasplatte ist mit einem völlig homogenen Film beschichtet. Die Homogenität läßt sich in der Durchsicht optisch und mechanisch durch die gleichmäßige Zugfestigkeit nachweisen.

### Beispiel 2

Der Versuch gemäß Beispiel 1 wird wiederholt, jedoch mit nur dem Unterschied, daß keine Mischluft durch die Öffnung 5 eingespeist wird. Die Beurteilung des auf der Glasplatte erzeugten Films ergibt, daß die Vermischung der Komponenten deutlich schlechter ist als bei dem gemäß Beispiel 1 hergestellten Film, kenntlich u. a. an einer Schlierenbildung.

### Beispiel 3

Der Versuch gemäß Beispiel 1 wird wiederholt, mit dem Unterschied, daß das Gemisch nach dem Prinzip des Umkehrbeschichtungsverfahrens auf eine Siliconmatrize, deren Oberfläche die Negativbildung eines Ledernarbens aufweist, aufgetragen wird, und daß auf die noch pastöse Masse ein Lederspalt aufkaschiert wird. Nach Passage einer Trocken- und Heizstrecke, die auf 85°C min aufgeheizt ist, und nach einer Gesamtverweilzeit von 5 Min., wird der Lederspalt mit der PUR-Beschichtung von der Matrize getrennt.

Der Lederspalt ist mit einer völlig homogenen PUR-Beschichtung versehen, die das Positiv des ursprünglichen Ledernarben wiedergibt.

### Patentansprüche

1. Verfahren zum Mischen mehrerer viskoser, schnell reagierender fluider Stoffe in zwei Stufen, dadurch gekennzeichnet, daß man die Stoffe und ein Gas in eine Mischkammer (1) einspeist, ihnen einen Drall aufprägt und sie vorvermischt und dieses Gas-Flüssigkeitsgemisch unmittelbar nach dessen Bildung einer durckverlustarmen statischen Mischvorrichtung (13) mit sich kreuzenden Leitflächen zuführt.

2. Verfahren nach Anspruch 1, dadurch gekennzeichnet, daß die Stoffe in Stromrichtung versetzt eingespeist werden.

3. Verfahren nach Anspruch 2, dadurch gekennzeichnet, daß der Stoff, der am meisten zum Massenstrom beiträgt, zuerst eingespeist wird.

4. Verfahren nach Ansprüchen 1 bis 3, dadurch gekennzeichnet, daß das Gas ein Inertgas, vorzugsweise Luft ist.

5. Verfahren nach Ansprüchen 1 bis 5, dadurch gekennzeichnet, daß das Gas ganz oder teilweise Bestandteil der Rezeptur ist.

6. Verfahren nach Ansprüchen 1 bis 5, dadurch gekennzeichnet, daß Isocyanatprepolymere und Kettenverlängerungsmittel, vorzugsweise Polyaminoverbindungen, und Luft tangential und versetzt in eine Mischkammer (1) eingetragen werden, das sich bildende Gemisch über einen statischen Mischer (13) mit sich kreuzenden Leitflächen fein vermischt und das gebildete Gemisch gegebenenfalls unter Luftzerstäubung verdüst wird.

7. Vorrichtung zur Durchführung des Verfahrens nach Ansprüchen 1 bis 6 bestehend aus einer zylindrischen Mischkammer (1) mit Einspeisestellen (5, 6, 7) für viskose, schnell reagierende fluide Stoffe und für Gas und einer Austrittsöffnung (14) an der Stirnseite der Mischkammer (1), dadurch gekennzeichnet, daß die Einspeisestellen (5, 6, 7) für mindestens einen Stoff und für das Gas so in der Mischkammer (1) eingebaut sind, daß Stoff und Gas näherungsweise tangential in die Mischkammer (1) von der Mantelfläche her einströmen, daß die Einspeisestelle(n) für die weiteren Stoffe stromabwärts hin versetzt sind und daß zwischen Einspeisestelle(n) (5, 6, 7) und Austrittsöffnung (14) eine statische Mischvorrichtung (13) vorhanden ist.

8. Vorrichtung nach Anspruch 7, dadurch gekennzeichnet, daß stromabwärts von der Eintrittsöffnung (7) ein oder mehrere zusätzliche Eintrittsöffnungen angebracht sind.

### Claims

1. A method of mixing a plurality of viscous, rapidly reacting, fluid materials in two stages, characterised in that the materials and a gas are introduced into a mixing chamber (1), imparted with an angular momemtum and premixed and this mixture of gas and liquid is fed directly after being formed to a static mixing apparatus (13) which has a low pressure loss and intersecting baffle plates.

2. A method according to Claim 1, characterised in that the materials are introduced offset in the direction of flow.

3. A method according to Claim 2, characterised in that the material which most contributes to the quantitative rate of flow is introduced first of all.

4. A method according to Claims 1 to 3, characterised in that the gas is an inert gas, preferably air.

5. A method according to Claims 1 to 5, characterised in that the gas is wholly or partially a constituent of the formulation.

6. A method according to Claims 1 to 5, characterised in that isocyanate prepolymers and chain extenders, preferably polyamino compounds, and air are introduced tangentially and at offset positions into a mixing chamber (1), the mixture being formed is finely mixed by means of a static mixer (13) with intersecting baffle plates and the mixture formed is atomised optionally with air atomisation.

7. An apparatus for carrying out the method according to Claims 1 to 6, comprising a cylindrical mixing chamber (1) with inlet points (5, 6, 7) for viscous, rapidly reacting, fluid materials and for gas, and an outlet opening (14) at the downstream end of the mixing chamber (1), characterised in that the inlet points (5, 6, 7) for at least one material and for the gas are arranged in the mixing chamber (1) so that the material and the gas flow approximately tangentially from the casing surface into the mixing chamber (1), the inlet point(s) for the other materials are offset in a downstream direction and a static mixing apparatus (13) is provided between the inlet point(s) (5, 6, 7) and the outlet opening (14).

8. An apparatus according to Claim 7, characterised in that one or more additional inlet openings are arranged downstream of the inlet opening (7).

## Revendications

1. Procédé pour mélanger en deux étapes plusieurs matières liquides visqueuses réagissant rapidement, caractérisé en ce que l'on envoie les matières et un gaz dans une chambre de mélange (1), on leur imprime une torsion et on envoie immédiatement ce prémélange gaz-liquide après sa formation dans un dispositif de mélange statique (13) à surfaces de guidage qui se croisent, et qui crée une faible perte de charge.

2. Procédé selon la revendication 1, caractérisé en ce que l'on introduit les matières à des endroits décalés dans le sens du courant.

3. Procédé selon la revendication 2, caractérisé en ce que l'on introduit en premier la matière qui contribue le plus à la masse du courant.

4. Procédé selon les revendications 1 à 3, caractérisé en ce que le gaz est un gaz inerte, de préférence l'air.

5. Procédé selon les revendications 1 à 4, caractérisé en ce que le gaz est en totalité ou en partie un constituant de la formule.

6. Procédé selon les revendications 1 à 5, caractérisé en ce que l'on introduit des prépolymères d'isocyanates et des agents d'allongement des chaînes, de préférence des composés polyaminés, et de l'air, tangentiellement et à des endroits décalés dans une chambre de mélange (1), on soumet le mélange obtenu à un mélange intensif dans un mélangeur statique (13) à surfaces de guidage qui se croisent et, le cas échéant, on atomise le mélange sous injection d'air.

7. Appareillage pour la mise en oeuvre du procédé selon les revendications 1 à 6, consistant en une chambre de mélange cylindrique (1) avec endroits d'alimentation (5, 6, 7) pour matières liquides visqueuses réagissant rapidement et pour un gaz et orifice d'évacuation (14) sur la face frontale de la chambre de mélange (1), caractérisé en ce que les endroits d'alimentation (5, 6, 7) pour au moins une matière et pour le gaz sont disposés dans la chambre de mélange (1) en sorte que la matière et le gaz pénètrent à peu près tangentiellement dans la chambre de mélange (1) en provenance de la surface d'enveloppe, en ce que le ou les endroits d'alimentation pour les autres matières sont décalés en aval du courant et en ce que, entre le ou les endroits d'alimentation (5, 6, 7) et l'orifice d'évacuation (14) se trouve un dispositif de mélange statique (13).

8. Appareillage selon la revendication 7, caractérisé en ce que, en aval de l'orifice d'alimentation (7), se trouvent un ou plusieurs orifices d'alimentation supplémentaires.

FIG. 1

FIG. 2 (A-B)

FIG. 3 (C-D)